**Europäisches Patentamt**

**European Patent Office**

**Office européen des brevets**

(19)

(11) Numéro de publication: **0 246 963**
**B1**

(12) **FASCICULE DE BREVET EUROPEEN**

(45) Date de publication du fascicule du brevet:
**18.10.89**

(51) Int. Cl.⁴: **E02B 15/04**

(21) Numéro de dépôt: **87401117.4**

(22) Date de dépôt: **19.05.87**

(54) Récupérateur de pollutions flottantes.

(30) Priorité: **20.05.86 FR 8607131**

(43) Date de publication de la demande:
**25.11.87 Bulletin 87/48**

(45) Mention de la délivrance du brevet:
**18.10.89 Bulletin 89/42**

(84) Etats contractants désignés:
**GB IT SE**

(56) Documents cités:
**WO-A-81/01720**
**FR-A- 2 282 506**
**US-A- 4 557 832**

(73) Titulaire: **Société d'Exploitation des Procédés EGMO**
**(S.E.P. - EGMO) SARL, Boulevard Isidore Marfille,**
**F-29283 Brest(FR)**

(72) Inventeur: **Bronnec, Jean, 9, rue Quartier-Maître**
**Bondon, F-29200 Brest(FR)**

(74) Mandataire: **Chambon, Gérard, Cabinet**
**Chambon 6 et 8 avenue Salvador Allende,**
**F-93804 Epinay-sur-Seine Cédex(FR)**

ACTORUM AG

## Description

L'invention concerne les récupérateurs de pollutions flottantes, en particulier des hydrocarbures.

Il existe un grand nombre de récupérateurs de tailles et de principes différents.

On trouve des récupérateurs mécaniques qui font appel à des propriétés d'écoulements de fluides et/ou de densité des hydrocarbures. Dans cette catégorie sont rangés les récupérateurs à aspiration directe, à vis horizontale, à bande transporteuse, ainsi que les appareils dits à "seuil déversoir" dans lesquels le seuil, le plus souvent flottant, réglable ou autoajustable à un niveau légèrement inférieur à celui de la surface du plan d'eau, permet de ne prélever que la couche superficielle recueillie, par gravité, dans un déversoir et reprise ensuite par une pompe incorporée ou non.

En dehors des récupérateurs mécaniques, existent des récupérateurs à action oléophile qui font appel aux propriétés d'adhérence naturelle des hydrocarbures à certains matériaux (la plupart des métaux, les chlorures de polyvinyle, les polyamides, les polyuréthanes, les polypropylènes,...) avec lesquels sont constitués les éléments du récupérateur (disques, courroie, tambour, corde flottante) qui sont partiellement immergés et qui entraînent les hydrocarbures vers un dispositif d'essuyage d'où ils s'écoulent dans une capacité pour être repris par une pompe d'évacuation.

Chaque type d'appareil a ses avantages et ses inconvénients et il faut choisir en fonction de nombreux critères: épaisseur de la couche polluante, viscosité, agitation du plan d'eau, autres éléments de la chaîne de récupération (barrages, moyens de manutention, moyens de stockage, etc.), utilisation en zône abritée ou non.

Les appareils à seuil-déversoir peuvent avoir un bon débit, fonction de leur longueur et de la puissance d'aspiration. Par contre, ils ont une mauvaise sélectivité d'"écrémage", c'est-à-dire que le passage, par différence de niveau, au-dessus du seuil n'est que très peu sélectif et entraîne beaucoup d'eau avec le produit flottant, surtout si ce dernier est de faible viscosité. A l'opposé, si le produit flottant est très visqueux, ce qui est très souvent le cas des hydrocarbures, il se produit au passage du seuil des frottements et une perte de charge qui freinent l'écoulement du produit visqueux jusqu'à même le bloquer, alors que l'eau sous-jacente a tendance à passer, d'où un rendement de récupération très faible. Par ailleurs, l'efficacité des appareils à seuil fixe décroît rapidement avec l'agitation du plan d'eau, un simple clapot d'une trentaine de centimètres les rend à peu près inefficaces.

Les appareils à action oléophile sont nombreux. Afin d'accroître le pouvoir oléophile du matériau choisi, on peut agir sur l'état de surface, une certaine rugosité ou porosité permettant d'augmenter l'adhérence, mais il faut alors effectuer l'essuyage par pressage. De tels appareils ont une bonne sélectivité, ils entraînent peu d'eau, mais leur débit en hydrocarbures est faible, car si les produits fluides adhèrent bien, c'est en couche très mince, et les produits très visqueux ont une adhérence limitée.

Enfin, les impuretés, fréquentes dans les pollutions flottantes, ne sont pas entraînées et donc ne sont pas récupérées.

L'invention a pour objet un appareil faisant appel à la fois au phénomène physique d'oléophilie et aux propriétés des seuils-déversoirs à flotteur afin d'associer les avantages des systèmes à seuil-déversoir (grand débit) et de ceux à contact oléophile (bonne sélectivité).

Un dispositif avec rouleau oléophile et râcleur constituant un seuil-déversoir mettant donc en oeuvre cette double action est connu par le US-A-4557832, mais il répond à une préoccupation particulière, qui est de pouvoir utiliser une grille de retenue pour les pollutions solides et de traiter des couches relativement épaisses de produits très visqueux, l'appareil organisant un pressage de ces produits entre le rouleau et le râcleur, pour les pousser à travers la grille et ainsi les diviser au mieux. De plus, cet appareil est peu sélectif et une entrée d'eau permanente au-dessus du bord du compartiment récepteur ne lui permet pas de jouer le rôle de séparateur.

L'appareil récupérateur de pollution selon l'invention du type dit à seuil-déversoir flottant mobile, comporte une structure rigide qui comprend un compartiment récupérateur, des capacités de flottabilité étanches et qui porte à sa partie inférieure des clapets ouvrant vers l'extérieur et une pompe munie d'une tuyauterie souple de refoulement vers une capacité de stockage. Il est remarquable en ce que chaque seuil-déversoir est constitué par la génératrice supérieure d'un flotteur cylindrique partiellement immergé dans le compartiment récepteur, pouvant être mû en rotation, de manière à entraîner ladite génératrice supérieure vers le récepteur, par un moteur et disposé entre deux flasques articulées sur la partie inférieure de la structure rigide, de manière à débattre entre deux positions de butée respectivement haute et basse, tandis que la paroi extérieure dudit flotteur cylindrique est réalisée en matériau oléophile ou recouverte d'un tel matériau et qu'un élément racleur assurant l'essuyage de ce dernier, est monté de façon à suivre le débattement du flotteur et à refouler les produits essuyés vers le compartiment récepteur.

L'invention sera mieux comprise à la lecture de la description qui va suivre de divers modes de réalisation, donnés à titre d'exemples non limitatifs, avec référence aux dessins annexés, dans lesquels:

- la figure 1 est une vue de dessus d'un mode de réalisation d'un appareil selon l'invention,
- la figure 2 représente l'appareil de la figure 1 en élévation avec une 1/2 coupe AB,
- la figure 3 est une 1/2 coupe CD agrandie de la figure 1,
- les figures 4a, 4b, et 4c montrent schématiquement le mode de fonctionnement de l'appareil,
- les figures 5a, 5b et 5c représentent, vus de dessus, des modes de réalisation avec, respectivement, 1, 3 et 4 seuils-déversoirs,
- la figure 6 est une vue de dessus d'un appareil à seuil unique équipé d'un flotteur tournant muni de disques.

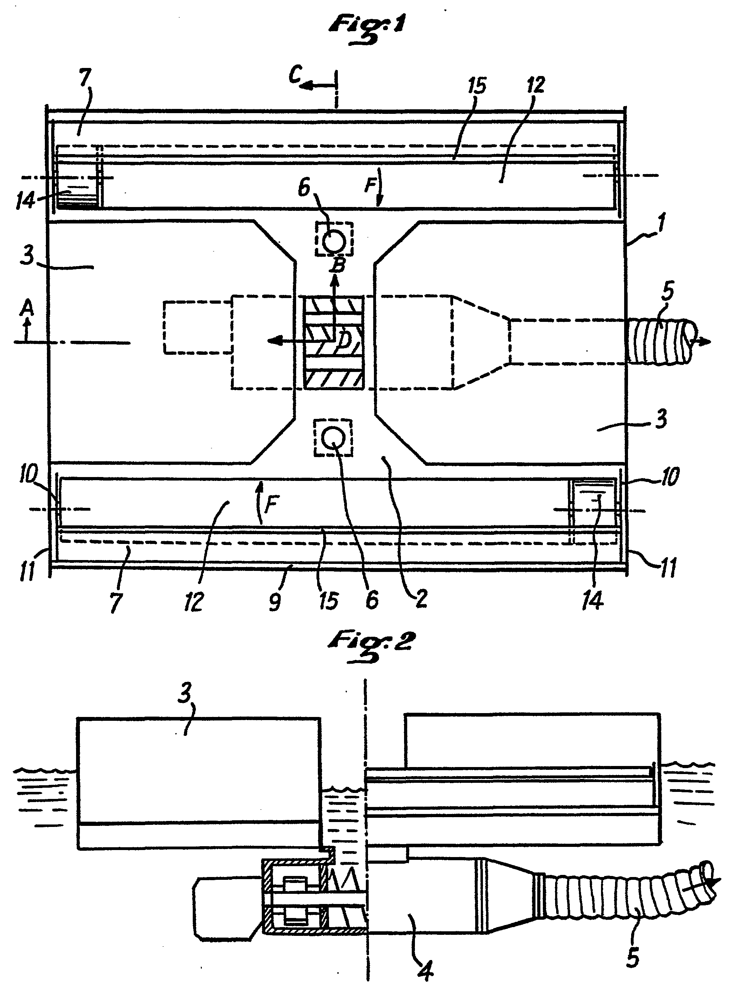

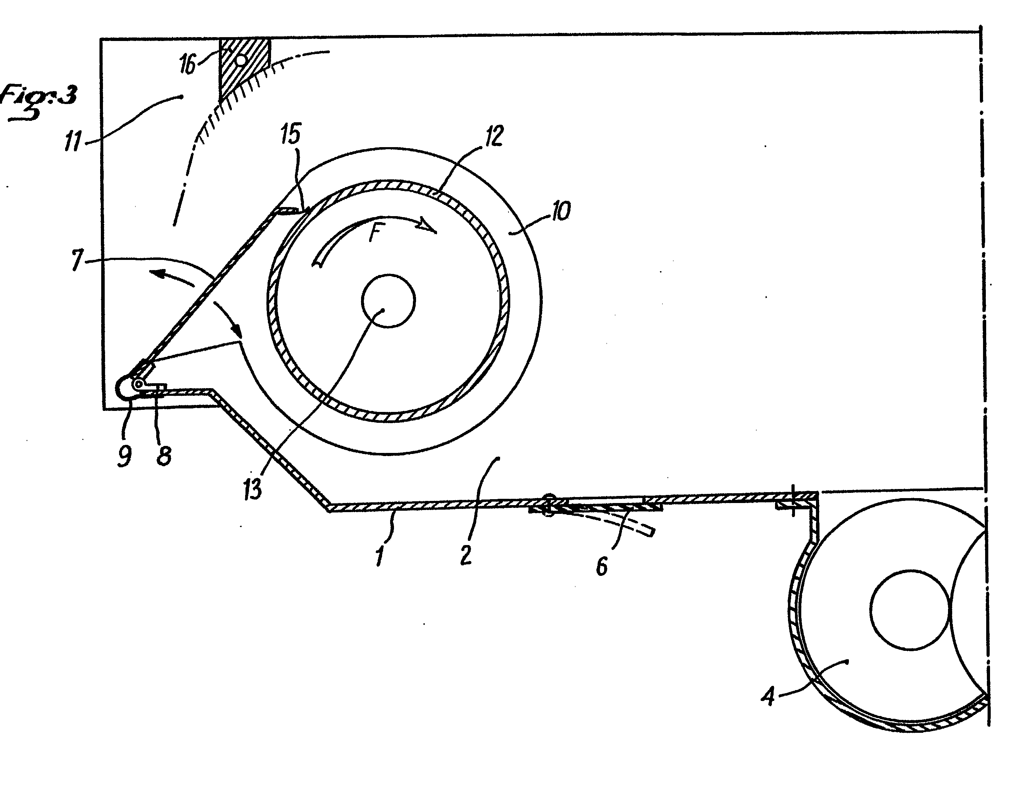

L'appareil représenté sur les figures 1-3 comporte une structure rigide 1, de préférence en tôle d'alliage léger, qui comprend un compartiment récepteur 2 ouvert vers le haut et deux capacités étanches 3 de flottabilité, et qui porte à sa partie inférieure une pompe 4, par exemple du type à double vis, munie d'une tuyauterie souple 5 de refoulement. Sur le fond du compartiment récepteur, sont disposés des clapets 6, ouvrant vers l'extérieur, et représentés ici sous la forme de clapets à lamelle souple. Sur la structure 1, sont articulés deux volets 7, chacun par l'intermédiaire d'une charnière étanche, réalisée, dans l'exemple représenté, par la combinaison d'éléments de charnière ordinaire 8 et d'une membrane souple imperméable 9. Chacun de ces volets qui porte à chacune de ses extrémités une flasque 10 s'étendant vers l'intérieur du compartiment 2, est libre en débattement, un jeu minimum de fonctionnement étant réservé entre les flasques d'extrémité 10 et les cloisons verticales 11 de la structure. Ce débattement est limité vers le haut par une butée rigide 16 et vers le bas, par le fond du compartiment récepteur 2.

Chaque volet porte un flotteur 12 de forme cylindrique dont la face extérieure est réalisée en un matériau oléophile ou recouverte d'un tel matériau. Chaque flotteur 12 tourillonne dans deux paliers 13 portés respectivement par les flasques 10 du volet correspondant. L'un des paliers 13 comporte un moteur d'entraînement 14. Avantageusement, le moteur 14 est un moteur hydraulique relié par des tuyauteries souples d'alimentation et de retour (non représentées) à un groupe générateur hydraulique (non représenté).

Ce groupe générateur hydraulique est relié de la même façon, par d'autres tuyauteries, au moteur de la pompe 4.

En fonctionnement normal, le cylindre tourne dans le sens de la flèche F. Sur la génératrice de contact, entre la partie longitudinale plane du volet et le cylindre, est monté un élément souple racleur 15 qui assure un essuyage du cylindre tournant.

Les volumes du compartiment 2, d'une part, et des capacités de flottabilité, d'autre part, sont tels que le niveau de flottabilité de l'ensemble de l'appareil est très peu sensible aux variations de poids résultant d'une variation de niveau dans le compartiment 2.

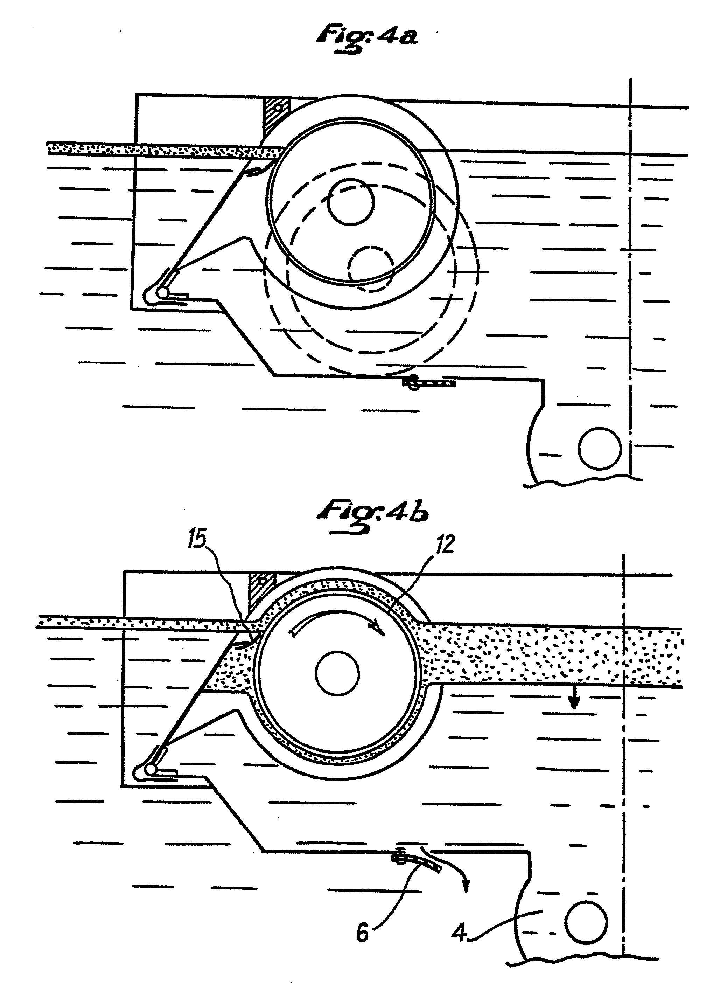

Le fonctionnement est le suivant. Les flotteurs cylindriques sont, en l'absence d'eau, en position basse (en pointillés sur la figure 4a). Lorsque l'appareil est posé sur le plan d'eau, il flotte à un niveau tel que la capacité intérieure se remplit d'eau progressivement grâce aux légères fuites, dues au jeu de fonctionnement entre les flasques d'extrémités 10 des volets et les cloisons 11.

Ce remplissage a pour effet de faire monter les flotteurs cylindriques jusqu'à un niveau tel que leur génératrice supérieure se maintient au-dessus du niveau de surface devenu alors commun à l'extérieur et à l'intérieur (figure 4a).

La pompe 4, située au fond du compartiment intérieur, est apte à absorber un débit réglable de liquide et à le refouler par les tuyauteries souples 5 vers une capacité de stockage. On peut également procéder par aspiration à partir de la capacité de stockage. Enfin, dans le cas d'une capacité de stockage située en contrebas, une pompe n'est pas indispensable, un écoulement par gravité devenant suffisant, le réglage de débit se fait alors simplement par l'ouverture plus ou moins large d'une vanne (on est cependant alors limité à des viscosités faibles).

La mise en rotation des cylindres, dont la surface extérieure est en contact avec la couche d'hydrocarbure flottant, a pour effet d'entraîner par adhérence cet hydrocarbure vers le compartiment intérieur. La vitesse des cylindres étant réglable par action sur le débit hydraulique de leurs moteurs, l'hydrocarbure peut être entraîné plus ou moins vite. Il est à remarquer que, compte tenu de l'immersion importante des cylindres et de leur butée haute, le trajet, comme la hauteur à franchir par l'hydrocarbure entraîné, restent toujours très limités, ce qui est favorable à un entraînement maximum en limitant les pertes par écoulement naturel.

A partir de la position de départ définie ci-dessus, et suivant les valeurs relatives des vitesses de rotation des cylindres et de la pompe, on obtient les fonctionnements suivants:

1) (Figure 4b) - Les cylindres 12 tournent, la pompe 4 ne tourne pas:

Les Cylindres entraînent l'hydrocarbure flottant vers le compartiment intérieur. La partie de l'hydrocarbure qui adhère directement aux cylindres est essuyée par le racleur 15 et reste donc dans ce compartiment intérieur. Dans cette enceinte la couche flottante va s'épaissir progressivement vers le bas pendant qu'un volume égal d'eau s'évacue par les clapets de fond 6. Le fonctionnement de l'appareil utilise dans ce cas uniquement l'effet oléophile (ou d'adhérence), c'est-à-dire que la sélectivité est maximum. On règle la vitesse des cylindres (en fonction de la viscosité de l'hydrocarbure) pour obtenir le débit maximum.

2) (Figure 4c) - Les cylindres 12 tournent et la pompe 4 tourne:

Dans la configuration du 1), le compartiment intérieur se chargeait progressivement en hydrocarbure. Lorsqu'il ne contient plus d'eau, il faut évidemment mettre en rotation la pompe 4.

Si la vitesse de la pompe est ajustée de telle façon que le débit évacué par elle soit égal au débit entraîné par les cylindres, le niveau dans le compartiment intérieur reste sensiblement constant et très voisin de celui de l'extérieur. On est en fonctionnement continu purement oléophile.

Une augmentation de la vitesse de la pompe, donc de son débit, se traduit immédiatement par une baisse du niveau dans le compartiment récupérateur, ce qui fait abaisser chaque ensemble cylindre flottant 12 et volet 7 par rotation autour de sa charnière. Le résultat est qu'il passe une couche plus épaisse au-dessus de ces cylindres, ce qui, ajouté à la dénivellation créée entre l'extérieur et l'intérieur, se traduit finalement par un débit de récupération plus important (on peut ajuster cette épaisseur à celle de la couche flottante d'hydrocarbure à éliminer, de façon à ne récupérer que ce dernier).

Le débit passant au-dessus de seuil est favorisé par la dénivellation créée entre l'intérieur et l'extérieur, et, de plus, le passage des filets fluides est accéléré par la rotation des cylindres auxquels adhèrent l'hydrocarbure. Remarquons que, dans ces conditions, le niveau dans le compartiment intérieur restant inférieur à celui de l'extérieur, les clapets 6 sont maintenus fermés par la pression différentielle.

Le système est autorégulateur: en effet, toute variation de débit de la pompe se traduit par une position stable correspondante des cylindres flottants: une augmentation les enfonce, et le débit seuil-déversoir augmente, et vice-versa.

L'addition des phénomènes d'adhérence et de chute naturelle a pour effet d'assurer à la fois un débit maximum et une sélectivité maximum. Par ailleurs, si la viscosité du produit flottant est telle que l'on puisse craindre une perte de charge importante au passage du seuil pouvant freiner ce débit, la rotation des cylindres oléophiles a pour effet de la supprimer et même de donner un effet accélérateur, tout en évitant que l'eau se glisse entre l'hydrocarbure et les cylindres, contrairement à ce qui se produit avec un seuil-déversoir fixe, où l'on est alors tenté d'augmenter le débit de la pompe de façon exagérée pour accélérer le passage aux seuils, avec, pour conséquence, l'entrée de quantités considérables d'eau dont il faut se débarrasser ensuite.

Enfin les impuretés peuvent être entraînées et donc récupérées grâce à l'effet "seuil-déversoir".

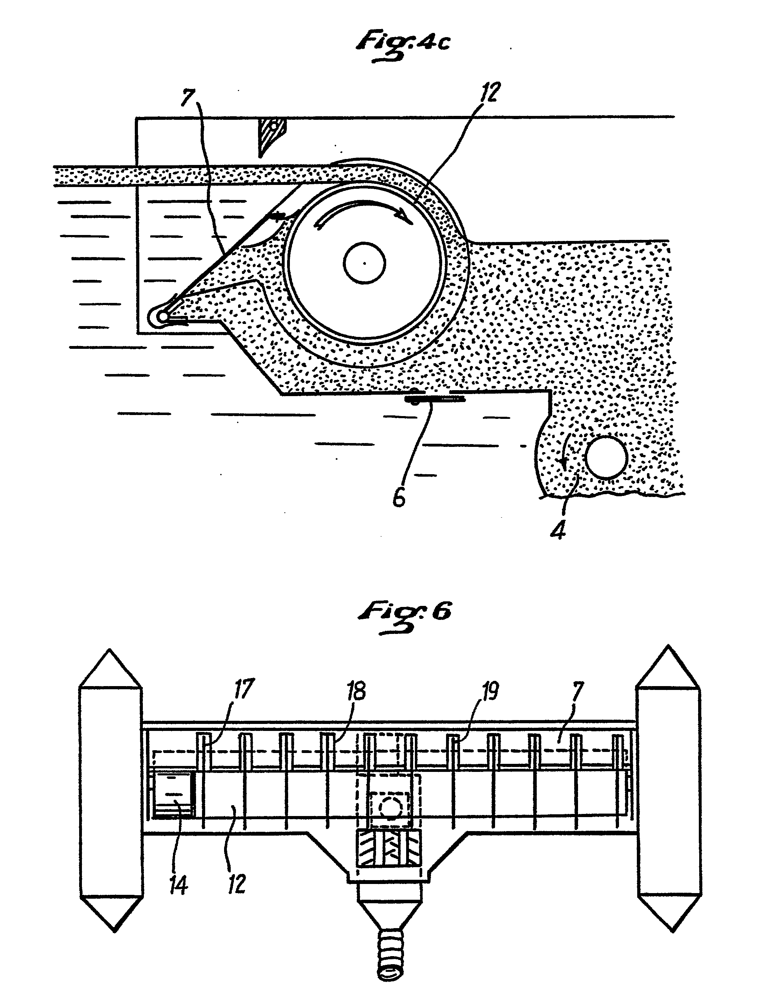

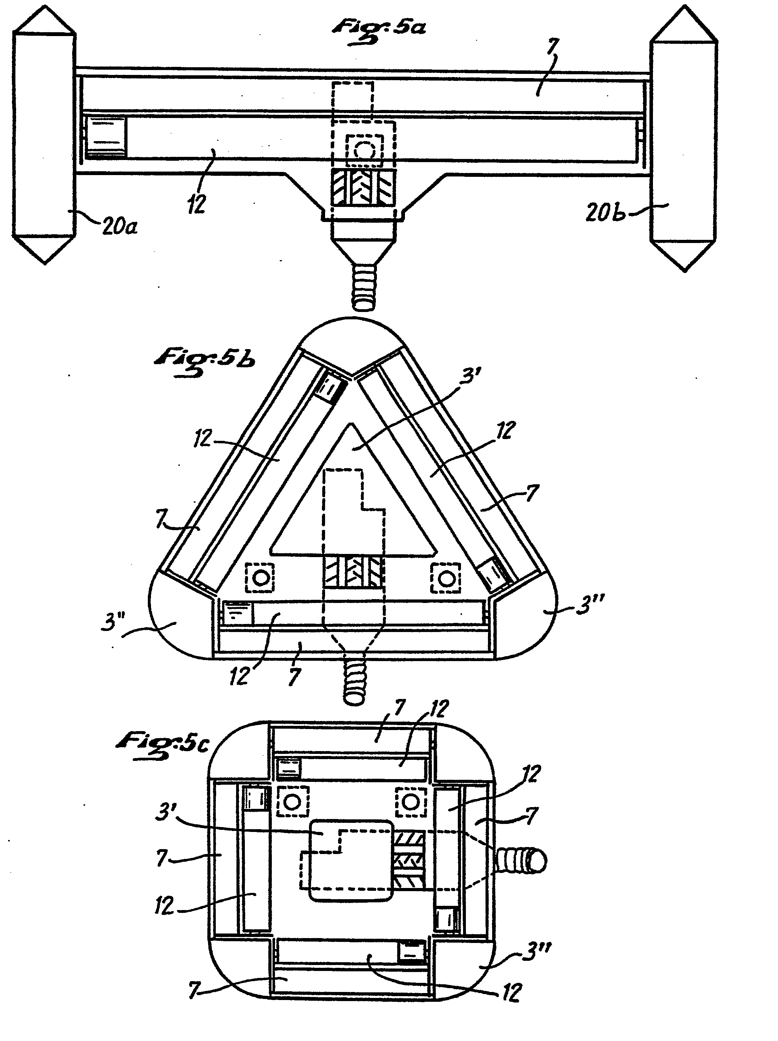

Dans l'exemple représenté aux figures 1-3, l'appareil est symétrique et comporte deux ensembles de volets à cylindres tournants. Il est évident que le nombre de volets peut être quelconque. Sur les figures 5a-5c, sont représentées en plan des dispositions de récupérateurs à 1 volet (5a), à 3 volets (5b) et à 4 volets (5c). En fait, le nombre de volets est quelconque, ainsi d'ailleurs que le nombre des capacités de flottabilité. Avantageusement, pour une configuration polygonale, on prévoit une capacité centrale 3' et une capacite 3" à chacun des angles de cette configuration. Le choix du nombre de volets dépend de paramètres divers.

Le mode de réalisation à volet unique (figures 5a et 6) est plus particulièrement indiqué pour un appareil légèrement dynamique ou devant fonctionner dans un courant. Les solutions à 3 ou 4 volets présentent un périmètre de récupération maximal mais conduisent à des appareils plus lourds et plus chers. La solution à 2 volets est un bon compromis pour une récupération statique dans une aire confinée (barrage, lagune de décantation de raffinerie ou autre installation pétrolière). Avec deux volets, le prix reste relativement faible et le poids (150 kgs environ) correspond à celui des appareils dits "portables".

Dans tous les cas, chaque flotteur cylindrique peut être muni d'une pluralité de disques minces 17. réalisés en un matériau oléophile, qui lui sont concentriques et qui tournent avec lui, tel que cela est représenté à la figure 6. Ces disques tournent librement au travers du volet grâce à des fentes 18 munies de lamelles d'essuyage 19.

Tous les modes de réalisation décrits ci-avant présentent, sur tous les appareils connus jusqu'à ce jour, l'avantage que leur confère la grand mobilité du seuil flottant qui, léger et indépendant du reste de la structure, s'adapte à toutes les variations du niveau, mêmes rapides (clapot). En outre, au courant naturel gravitaire, vient s'ajouter la vitesse induite tangentielle.

## Revendications

1) Appareil récupérateur de pollutions flottantes, en particulier des hydrocarbures, du type dit à seuil-déversoir flottant mobile, simple ou multiple, comportant une structure rigide (1) qui comprend un compartiment récupérateur (2), des capacités de flottabilité (3) étanches et qui porte à sa partie inférieure des clapets (6) ouvrant vers l'extérieur et une pompe (4) munie d'une tuyauterie souple (5) de refoulement vers une capacité de stockage, caractérisé en ce que chaque seuil-déversoir est constitué par la génératrice supérieure d'un flotteur cylindrique (12) partiellement immergé dans le compartiment récepteur, pouvant être mû en rotation, de manière à entraîner ladite génératrice supérieure vers le récepteur, par un moteur (14) et disposé entre deux flasques (10) articulées sur la partie inférieure de la structure rigide, de manière à débattre entre deux positions de butée respectivement haute et basse, tandis que la paroi extérieure dudit flotteur cylindrique (12) est réalisée en matériau oléophile ou recouverte d'un tel matériau et qu'un élément racleur (15) assurant l'essuyage de ce dernier, est monté de façon à suivre le débattement du flotteur.

2) Appareil récupérateur de pollutions flottants selon la revendication 1, caractérisé en ce que, pour chaque seuil-déversoir, les flasques (10) entre lesquelles tourillonnent le flotteur cylindrique (12) sont portées par un volet (7) qui est articulé sur la structure rigide par l'intermédiaire d'une charnière étanche (8-9), qui porte l'élément racleur (15) et qui constitue la paroi correspondante du compartiment récepteur (2), un jeu minimum de fonctionnement étant réservé entre chaque flasque (10) et la paroi verticale adjacente (11) de la structure.

3) Appareil récupérateur de pollutions flottantes selon l'une des revendications 1 et 2, caractérisé en ce que, pour chaque seuil-déversoir, le flotteur cylindrique tournant (12) est muni d'une pluralité de disques (17) minces en un matériau oléophile, qui lui sont concentriques et qui tournent avec lui en passant au travers de fentes (18) ménagées dans le volet et munies de lamelles d'essuyage (19).

4) Appareil récupérateur de pollutions flottantes selon l'une des revendications 1-3, caractérisé en ce qu'il comporte un flotteur cylindrique unique tandis que les capacités de flottabilité (20a,20b) sont au nombre de deux, disposées respectivement aux extrémités du compartiment récepteur.

5) Appareil récupérateur de pollutions flottantes selon l'une des revendications 1-3, caractérisé en ce qu'il comporte deux flotteurs cylindriques (12) disposés symétriquement par rapport à l'axe de la pompe (figure 1).

6) Appareil récupérateur de pollutions flottantes, selon l'une des revendications 1-3, caractérisé en ce qu'il comporte une pluralité de flotteurs cylindriques (12) disposés selon une configuration polygonale (figures 5b et 5c) avec une capacité de flottabilité centrale (3') et une capacité de flottabilité (3") à chacun des angles de ladite structure.

7) Appareil récupérateur de pollutions flottantes selon l'une quelconque des revendications 1-6, caractérisé en ce que le moteur d'entraînement (14) de chacun des flotteurs cylindriques tournants ainsi que celui de la pompe (4) sont des moteurs hydrauliques tous reliés à un même générateur hydraulique.

**Patentansprüche**

1. Vorrichtung zum Rückgewinnen von schwimmenden Verunreinigungen, insbesondere von Kohlenwasserstoffen, der Art, die mit einer oder mehreren schwimmenden, beweglichen Überlaufschwelle(n) und mit einer starren Struktur (1), versehen ist, die einen Rückgewinnungsbehälter (2) und abgedichtete Auftriebskörper (3) aufweist und an ihrer unteren Seite Klappen (6), die sich nach außen öffnen, und eine Pumpe (4) trägt, die mit einer biegsamen Rückführleitung (5) zu einem Speicherraum versehen ist, dadurch gekennzeichnet, daß jede Überlaufschwelle durch die obere Mantellinie eines zylindrischen Schwimmkörpers (12) gebildet wird, der teilweise in den Aufnahmebehälter eintaucht und durch einen Motor (14) in Rotationsbewegung gesetzt werden kann derart, daß die obere Mantellinie in Richtung auf den Aufnahmebehälter verschwenkt wird, und zwischen zwei beweglichen Flanschen (10) am unteren Teil der starren Struktur angeordnet ist derart, daß er zwischen zwei oben bzw. unten angeordneten Anschlagpositionen bewegbar ist, und daß die Außenwand des zylindrischen Schwimmkörpers (12) aus einem oleophilen Material gefertigt oder mit einem solchen Material abgedeckt ist und ein das Abstreifen des letzteren bewirkendes Abstreifelement (15) derart montiert ist, daß es den Bewegungen des Schwimmkörpers folgt.

2. Vorrichtung zum Rückgewinnen von schwimmenden Verunreinigungen nach Anspruch 1, dadurch gekennzeichnet, daß für jede Überlaufschwelle die Flansche (10), zwischen welchen der zylindrische Schwimmkörper (12) rotiert, durch eine Klappe (7) getragen werden, die unter Zwischenschaltung eines abgedichteten Gelenks (8, 9) schwenkbar an der starren Struktur angebracht ist, das Abstreifelement (15) trägt und die entsprechende Wand des Aufnahmebehältes (2) bildet und daß ein Mindest-Betriebsspalt zwischen jedem Flansch 10 und der angrenzenden senkrechten Wand (11) der Struktur verbleibt.

3. Vorrichtung zum Rückgewinnen von schwimmenden Verunreinigungen nach einem der Ansprüche 1 und 2, dadurch gekennzeichnet, daß für jede Überlaufschwelle der rotierende, zylindrische Schwimmkörper (12) eine Vielzahl von dünnen Scheiben (17) aus oleophilem Material aufweist, die auf ihm konzentrisch angeordnet sind und mit ihm rotieren und Aussparungen (18) durchfahren, die auf der Klappe angeordnet sind und Abstreiflamellen (19) aufweisen.

4. Vorrichtung zum Rückgewinnen von schwimmenden Verunreinigungen nach einem der Ansprüche 1-3, dadurch gekennzeichnet, daß sie einen einzigen zylindrischen Schwimmkörper und zwei Auftriebskörper (20a, 20b) aufweist, welche an gegenüberliegenden äußeren Enden des Aufnahmebehälters angeordnet sind.

5. Vorrichtung zum Rückgewinnen von schwimmenden Verunreinigungen nach einem der Ansprüche 1-3, dadurch gekennzeichnet, daß sie zwei zylindrische Schwimmkörper (12) aufweist, die symmetrisch in bezug auf die Achse der Pumpe angeordnet sind (Fig. 1).

6. Vorrichtung zum Rückgewinnen von schwimmenden Verunreinigungen nach einem der Ansprüche 1-3, dadurch gekennzeichnet, daß sie mehrere zylindrische Schwimmkörper (12), die in einer polygonalen Konfiguration (Fig. 5b und 5c) angeordnet sind, und einen zentralen Auftriebskörper (3') und einen Auftriebskörper (3") an jeder Ecke der Struktur aufweist.

7. Vorrichtung zum Rückgewinnen von schwimmenden Verunreinigungen nach einem der Ansprüche 1-6, dadurch gekennzeichnet, daß der Antriebsmotor (14) jedes drehenden zylindrischen Schwimmkörpers sowie der der Pumpe (4) hydraulische Motoren sind, die alle an einen gemeinsamen Hydraulikgenerator angeschlossen sind.

**Claims**

1. An apparatus for recovering floating pollutants, in particular hydrocarbons, of the so-called single or multiple mobile floating weir type having a rigid structure (1) which comprises a recovery compartment (2) and sealed buoyancy tanks (3) and in its lower part carries valves (6) opening towards the outside and a pump (4) fitted with a flexible pipe (5) for delivery to a storage tank, characterised in that each weir is constituted by the upper generating line of a cylindrical float (12) partially submerged in the receiving compartment, capable of being moved in rotation by a motor (14) so as to entrain said upper generating line towards the receiver, and disposed between two side plates (10) articulated on the lower part of the rigid structure so as to move between an upper and a lower limit position respectively, while the external wall of said cylindrical float (12) is made of an oil-attracting material or covered with such a material, and in that a scraping element (15) wiping the latter is mounted so as to follow the movement of the float.

2. An apparatus for recovering floating pollutants as in claim 1, characterised in that for each weir the side plates (10) between which the cylindrical float (12) pivots are carried by a flap (7) which is articulated on the rigid structure through the intermediary of a sealed hinge (8–9) which carries the scraping element (15) and which constitutes the corresponding wall of the receiving compartment (2), a minimum operating clearance being maintained between each side plate (10) and the adjacent vertical wall (11) of the structure.

3. An apparatus for recovering floating pollutants as in one of claims 1 and 2, characterised in that for each weir the turning cylindrical float (12) is fitted with a plurality of thin discs (17) made of a oil-attracting material which are concentric with it and which turn with it passing through slots (18) formed in the flap and fitted with wiping strips (19).

4. An apparatus for recovering floating pollutants as in one of claims 1 to 3, characterised in that it comprises a single cylindrical float while the buoyancy tanks (20a, 20b) are two in number and disposed at the ends of the receiving compartment respectively.

5. An apparatus for recovering floating pollutants as in one of claims 1 to 3, characterised in that it comprises two cylindrical floats (12) disposed symmetrically in relation to the axis of the pump (Figure 1).

6. An apparatus for recovering floating pollutants as in one of claims 1 to 3, characterised in that it comprises a plurality of cylindrical floats (12) disposed in a polygonal configuration (Figures 5b and 5c) with one central buoyancy tank (3') and a buoyancy tanks (3") at each of the angles of said structure.

7. An apparatus for recovering floating pollutants as in any one of claims 1 to 6, characterised in that the driving motor (14) of each of the turning cylindrical floats and that of the pump (4) are hydraulic motors all connected to one and the same hydraulic generator.

Fig.1

Fig.2

Fig. 3

EP 0 246 963 B1

## Fig. 4a

## Fig. 4b

Fig. 4c

Fig. 6

*Fig.5a*

7

20a

12

20b

*Fig.5b*

12

3'

12

7

7

3"

12

7

3"

*Fig.5c*

7

12

3'

12

7

7

12

3"

7

12